# EUROPEAN PATENT SPECIFICATION

(11) **EP 3 699 435 B1**
(45) Date of publication and mention of the grant of the patent: **13.09.2023**
(21) Application number: 18868678.6
(22) Date of filing: 19.10.2018
(51) Int. Cl.: F04D 13/02, F04D 29/62, F04D 13/06, F16D 1/076

(54) **PUMP, PUMP DEVICE, AND METHOD OF DISASSEMBLING PUMP DEVICE**
PUMPE, PUMPVORRICHTUNG UND VERFAHREN ZUR DEMONTAGE EINER PUMPVORRICHTUNG
POMPE, DISPOSITIF DE TYPE POMPE ET PROCÉDÉ DE DÉMONTAGE DE DISPOSITIF DE TYPE POMPE

(30) Priority: 20.10.2017 JP 2017203632
(43) Date of publication of application: 26.08.2020
(73) Proprietor: EBARA CORPORATION, Ota-ku, Tokyo 144-8510 (JP)
(72) Inventor: MIZUKI, Kagenobu, Tokyo 144-8510 (JP); KAWABATA, Junya, Tokyo 144-8510 (JP); NAKAMURA, Yoichi, Tokyo 144-8510 (JP)
(74) Representative: Emde, Eric
(86) International application number: PCT/JP2018/038912
(87) International publication number: WO 2019/078316

(56) References cited:
- EP-A1- 3 006 741
- CN-A- 106 762 834
- CN-U- 205 047 448
- JP-A- H0 942 193
- JP-A- H02 243 230
- JP-A- 2000 337 298
- JP-A- 2017 067 039
- JP-A- 2017 067 039
- JP-U- S 518 600
- US-A- 5 051 071
- US-A1- 2017 211 580
- US-A1- 2017 248 151

## Description

### TECHNICAL FIELD

The present invention relates to a pump, a pump device, and a method for disassembling a pump device.

### BACKGROUND ART

A motor integrated pump in which a motor main shaft is coupled to a pump main shaft is known. In such a motor integrated pump, the main shaft extends up to a position to which an impeller of the pump is attached.

As a method for coupling the motor main shaft to the pump main shaft, inserting and coupling a distal end of the pump main shaft into an opening of the motor main shaft in a wedge-shaped manner is known (see JP 45-11746 ). Also, coupling the motor main shaft to the pump main shaft with a claw coupling with an elastic element interposed therebetween is also known (see JP 61-116192).

Moreover, CN 205 047 448 U discloses a no bearing pump including a support including a support body, the inside cavity thereof and both ends being connected with a motor and a pump respectively, the tip of the pump shaft being equipped with a sleeve with a coaxial setting of the pump shaft. The sleeve is located inside the support body, there is a flange joint between the sleeve and the pump shaft, wherein the motor shaft and the sleeve are interference fitted. Furthermore, JP 2017-67039 A discloses a turbo pump including a mechanical seal in a part where a main shaft supporting an impeller penetrates a pump casing and in which the main shaft is connected to a motor shaft of a motor using a pump side coupling and a motor side coupling.

### SUMMARY OF INVENTION

### TECHNICAL PROBLEM

However, with the coupling method described in JP 45-11746, there is a concern that the pump main shaft cannot be pulled out of the opening of the motor main shaft when the pump is separated from the motor, for example, since the distal end of the pump main shaft is press-fitted into the opening of the motor main shaft in a wedge-shaped manner. Thus, there is a problem that it is difficult to carry out maintenance of the pump. Also, with the coupling method described in JP 61-116192, manufacturing costs increase since the claw coupling with a complicated shape is used to couple the pump main shaft to the motor main shaft. Also, operability when the pump is separated from the motor is not satisfactory.

The present invention was made in view of the aforementioned problems, and one of objects thereof is to provide a pump that facilitates separation from a motor while curbing degradation of pump performance.

### SOLUTION TO PROBLEM

In accordance with the present invention, a pump, a pump device and a method for disassembling a pump device as set forth in Claims 1, 6 and 7 is provided. Preferred embodiments of the invention are claimed in the dependent claims. According to an aspect of the present invention, a pump is provided. The pump includes: an impeller; a pump main shaft to which the impeller is attached; and a pump main shaft hub that is detachably attached to an end of the pump main shaft. The pump main shaft hub is a tubular member, into which a motor main shaft is able to be inserted, the pump main shaft hub is configured to be coupled to the motor main shaft via transition fitting. The pump main shaft hub has, in an outer peripheral surface, a locked portion configured to engage with a locking portion of a pulley removing device.

According to another aspect of the present invention, there is provided a method for disassembling a pump device in which a pump main shaft and a motor main shaft are connected via a pump main shaft tubular hub fitted to the motor main shaft. The method for disassembling a pump includes: a first process of detaching the pump main shaft from the pump main shaft hub; and a second process of pulling the pump main shaft hub out of the motor main shaft after the first process. The second process includes engaging a locking portion of a pulley removing device with a locked portion formed in an outer peripheral surface of the pump main shaft hub and pulling the pump main shaft hub out of the motor main shaft.

### BRIEF DESCRIPTION OF DRAWINGS

[Fig. 1] Fig. 1 is a partial side sectional view of a pump device according to an embodiment.
[Fig. 2A] Fig. 2A is a sectional view of a pump main shaft hub.
[Fig. 2B] Fig. 2B is a plan view of an end surface of the pump main shaft hub, which is brought into contact with a pump main shaft.
[Fig. 3A] Fig. 3A is a side view of the pump main shaft.
[Fig. 3B] Fig. 3B is a plan view of an end surface of the pump main shaft, which abuts on the end surface of the pump main shaft hub.

### DESCRIPTION OF EMBODIMENTS

Hereinafter, an embodiment of the present invention will be described with reference to drawings. The same reference signs will be applied to the same or corresponding components in the drawings described below, and repeated description will be omitted. Note that a transverse-type land pump will be described as an example of the pump device according to the present invention in the embodiment described below.

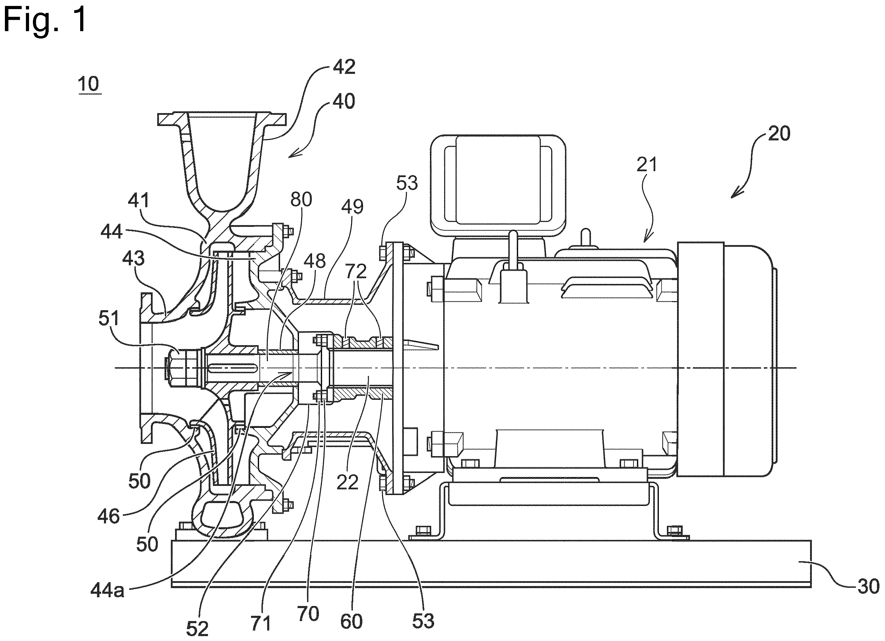

Fig. 1 is a partial side sectional view of a pump device according to an embodiment. In Fig. 1, portions except for a motor are illustrated in the sectional view. As illustrated in Fig. 1, a pump device 10 has a motor 20, a base 30, and a pump 40. The pump 40 and the motor 20 are secured onto the base 30. The motor 20 has a motor main body 21 and a rotatable motor main shaft 22. A pump main shaft hub 60 with a substantially cylindrical shape is fitted to the motor main shaft 22, and the pump main shaft hub 60 is pressed against and secured to the motor main shaft 22 in a radial direction with a screw 72.

The pump 40 has a casing 41 configured to accommodate an impeller 46 and a pump main shaft 80 to which the impeller 46 is attached. The impeller 46 is fitted to the pump main shaft 80 and is secured to the pump main shaft 80 with a blade stopper nut 51 such that the impeller 46 does not move in the axial direction. The pump main shaft 80 is secured to the pump main shaft hub 60 with stud bolts 70 and nuts 71 and is coupled to the motor main shaft 22 via the pump main shaft hub 60. Since a drive force of the motor main shaft 22 in a rotation direction is transferred to the pump main shaft 80 in this manner, the motor main shaft 22 is configured to be able to rotate along with the impeller 46. The pump 40 according to the embodiment is a horizontal-shaft pump and is coupled such that the motor main shaft 22 of the motor 20 and the pump main shaft 80 of the pump 40 extend in a substantially horizontal direction.

The casing 41 has a suctioning pipe 43 for suctioning a liquid and an ejection pipe 42 for ejecting a liquid with a pressure boosted by the impeller 46. A casing cover 44 is attached to the casing 41 on the side of the motor 20. The casing 41 and the casing cover 44 define a space accommodating the impeller 46 and a flow path of the liquid. The casing cover 44 has a pore 44a through which the pump main shaft 80 passes. A mechanical seal 48 (corresponding to an example of the sealing mechanism) that seals a clearance between the pump main shaft 80 and the pore 44a of the casing cover 44 is provided therebetween to curb flowing-out of a liquid from the space in the casing 41 and the casing cover 44 through the pore 44a.

Liner rings 50 are provided at portions of the casing 41 and the casing cover 44 that face the impeller 46. The liner rings 50 form minute clearances with the impeller 46 therebetween, curb returning of the liquid with a pressure boosted by the impeller 46 to a low-pressure side, and improve pump efficiency.

The pump device 10 has a bracket 49 that connects the casing cover 44 to the motor 20. The bracket 49 internally accommodates a coupling portion between the pump main shaft 80 and the motor main shaft 22. In other words, the bracket 49 is configured to internally accommodate the pump main shaft hub 60. The bracket 49 has an opening 52 for detaching the nuts 71 from the stud bolts 70. The opening 52 is provided at a position at which an operator can visually recognize the mechanical seal 48. Specifically, the opening 52 is preferably provided closer to the mechanical seal 48 than to the motor 20 in an axial direction of the pump main shaft 80, for example. In other words, the opening 52 is preferably provided on the side of the mechanical seal 48 beyond the center of the bracket in the axial direction. In this manner, the operator can easily look into the mechanical seal 48 from the opening 52 for inspection of the mechanical seal 48. Note that a protection plate, which is not illustrated, is attached to the opening 52 during an operation of the pump device 10.

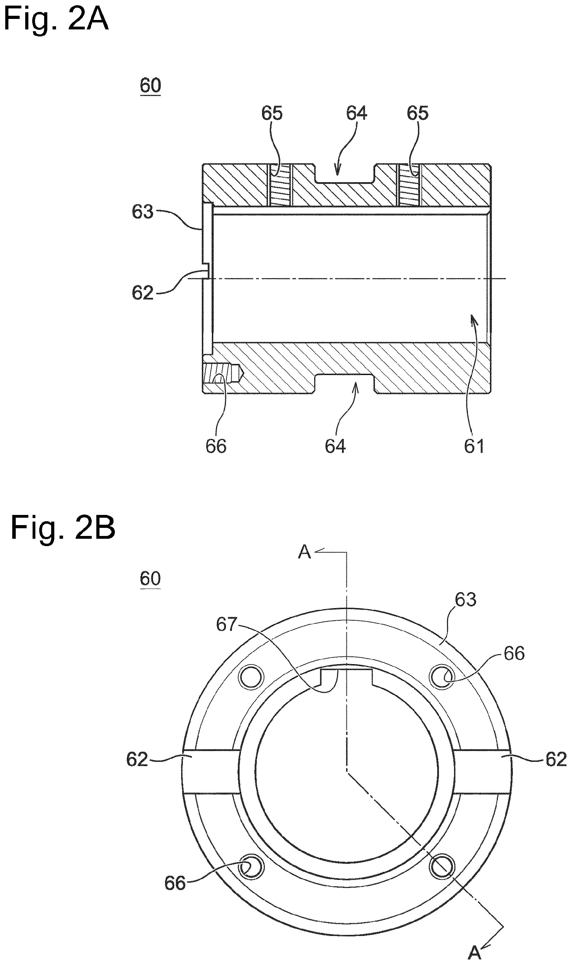

Next, details of the pump main shaft hub 60 will be described. Fig. 2A is a sectional view of the pump main shaft hub 60. Also, Fig. 2B is a plan view of the end surface of the pump main shaft hub 60 that is brought into contact with the pump main shaft 80. As illustrated in Fig. 2A, the pump main shaft hub 60 is a tubular member into which the motor main shaft 22 can be inserted. Here, the pump main shaft hub 60 is configured such that the pump main shaft hub 60 is coupled to the motor main shaft 22 via transition fitting when the pump main shaft hub 60 is fitted to the motor main shaft 22. Here, the transition fitting means fitting that creates either a gap or a fastening margin between a hole and a shaft when the shaft is fitted into the hole. In other words, the transition fitting means fitting in a case in which a maximum allowable dimension of the shaft is greater than a minimum allowable dimension of the hole and a minimum allowable dimension of the shaft is smaller than a maximum allowable dimension of the hole. When the pump main shaft hub 60 is fitted to the motor main shaft 22, shrinkage fitting, for example, is performed. Also, since the pump main shaft hub 60 is fitted to the motor main shaft 22 via the transition fitting, it is possible to pull the pump main shaft hub 60 out of the motor main shaft 22 using a pulley removing device (gear puller). Thus, it is possible to reduce the clearance between the pump main shaft hub 60 and the motor main shaft 22 within a range in which it is possible to pull the pump main shaft hub 60 out of the motor main shaft 22 if the pulley removing device is used in the embodiment.

As illustrated in Fig. 2A, the pump main shaft hub 60 has a through-hole 61 into which the motor main shaft 22 is inserted. Also, as illustrated in Fig. 2B, the pump main shaft hub 60 has a key groove 67 in an inner surface thereof. When the pump main shaft hub 60 is fitted to the motor main shaft 22, a key formed in the motor main shaft 22, which is not illustrated, is inserted into the key groove 67 in the pump main shaft hub 60. In this manner, a drive force of the motor main shaft 22 in a rotation direction is delivered to the pump main shaft hub 60.

As illustrated in Figs. 2A and 2B, an end surface 63 of the pump main shaft hub 60 that abuts on the pump main shaft 80 has holes 66 for securing the stud bolts 70 illustrated in Fig. 1. The holes 66 extend substantially in parallel to the through-hole 61 into which the motor main shaft 22 is inserted. Thus, the stud bolts 70 secured to the holes 66 are disposed so as to extend substantially in parallel to the pump main shaft 80 and the motor main shaft 22 as illustrated in Fig. 1. Although four holes 66 are provided at equal intervals in the example illustrated in Fig. 2B, the present invention is not limited thereto, and the number of holes 66 that can be provided is any number which is one or more. Note that in Fig. 2A, only one hole 66 is illustrated while the other holes 66 are omitted. A notch portion 62 is formed in the end surface 63. Although the notch portion 62 extends from an inner peripheral surface to an outer peripheral surface of the pump main shaft hub 60 in the embodiment, the present invention is not limited thereto, and it is only necessary for the notch portion 62 to reach at least the outer peripheral surface.

As illustrated in Fig. 2A, a locked portion 64 with a recessed shape is formed in the outer peripheral surface of the pump main shaft hub 60. The locked portion 64 is configured such that the locking portion of the pulley removing device is engaged therewith when the pump main shaft hub 60 is pulled out of the motor main shaft 22 as will be described later. The locked portion 64 can have any shape with which the locking portion of the pulley removing device can be engaged and may have a recessed shape as illustrated in Fig. 2A, for example, or may have a projecting shape. Also,the pump main shaft hub 60 has a hole 65 into which the screw 72 (see Fig. 1) for pressing the pump main shaft hub 60 against the motor main shaft 22 and securing the pump main shaft hub 60 to the motor main shaft 22 in the radial direction is screwed. Although two holes 65 are provided at separate locations in the axial direction in the example illustrated in Fig. 2A, it is possible to provide any number of holes 65.

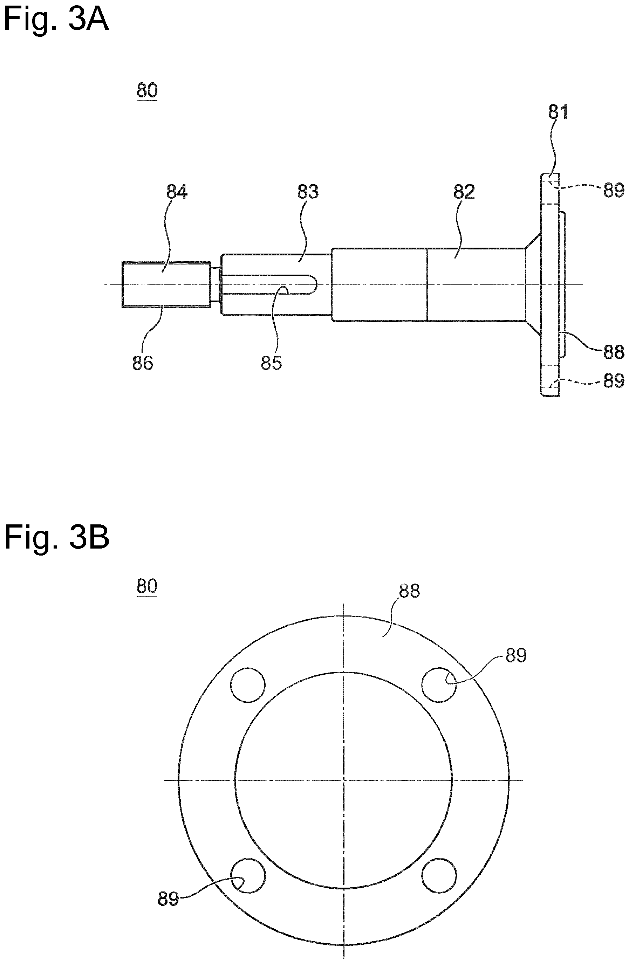

Next, details of the pump main shaft 80 illustrated in Fig. 1 will be described. Fig. 3A is a side view of the pump main shaft 80. Fig. 3B is a plan view of the end surface of the pump main shaft 80 that abuts on the end surface 63 of the pump main shaft hub 60. As illustrated in Fig. 3A, the pump main shaft 80 has a flange portion 81, a large diameter portion 82, a small diameter portion 83, and a bolt attachment portion 84. The flange portion 81 has an end surface 88 that abuts on the end surface 63 of the pump main shaft hub 60 illustrated in Figs. 2A and 2B. As illustrated in Fig. 3B, the end surface 88 has holes 89 through which the stud bolts 70 secured to the pump main shaft hub 60 pass. In the illustrated example, four holes 89 corresponding to the number of holes 66 in the pump main shaft hub 60 to which the stud bolts 70 are secured, that is, the number of stud bolts 70 are provided in the end surface 88 of the pump main shaft 80. As illustrated in Fig. 1, the pump main shaft 80 and the motor main shaft 22 are coupled via the pup main shaft hub 60 by fastening the nuts 71 in a state in which the stud bolts 70 secured to the pump main shaft hub 60 pass through the holes 89 in the flange portion 81 of the pump main shaft 80.

The large diameter portion 82 is a portion that extends from the flange portion 81 and passes through the opening 44a in the casing cover 44 as illustrated in Fig. 1. As illustrated in Fig. 1, the mechanical seal 48 is located at an outer periphery of the large diameter portion 82 and applies sealing between the opening 44a of the casing cover 44 and the large diameter portion 82 of the pump main shaft 80.

The small diameter portion 83 extends from the large diameter portion 82 and has a smaller outer diameter than the outer diameter of the large diameter portion 82. A key groove 85 is formed in an outer peripheral surface of the small diameter portion 83. When the impeller 46 is attached to the pump main shaft 80 as illustrated in Fig. 1, one key, which is not illustrated, is inserted into a key groove formed in the inner peripheral surface of the impeller 46, which is not illustrated, and the key groove 85 of the pump main shaft 80. In this manner, a drive force of the pump main shaft 80 in the rotation direction is delivered to the impeller 46.

The bolt attachment portion 84 is a portion that extends from the small diameter portion 83 and is located at the furthest end and has a smaller outer diameter than the outer diameter of the small diameter portion 83. A screw groove 86 is formed in an outer peripheral surface of the bolt attachment portion 84, and the impeller 46 is prevented from dropping out of the pump main shaft 80 by screwing the blade stopper nut 51 illustrated in Fig. 1 into the screw groove 86 in a state in which the impeller 46 is attached to the small diameter portion 83.

Effects and advantages of the pump device 10 according to the embodiment described above will be described in detail. As described above, the pump main shaft hub 60 is coupled to the motor main shaft 22 via transition fitting in the embodiment. Therefore, it is possible to pull the pump main shaft hub 60 out of the motor main shaft 22 using a pulley removing device and to reduce the clearance between the pump main shaft hub 60 and the motor main shaft 22. On the other hand, in a case in which a clearance is formed between the pump main shaft hub 60 and the motor main shaft 22 to such an extent that the pump main shaft hub 60 can be pulled easily (with a hand, for example) out of the motor main shaft 22, specifically, in a case in which the pump main shaft hub 60 and the motor main shaft 22 are connected via clearance fitting, for example, an axial center of the pump main shaft hub 60 deviates from the axial center of the motor main shaft 22 by the amount corresponding to the aforementioned clearance due the pump main shaft hub 60 secured to the motor main shaft 22 with the screw 72. In this case, the pump main shaft 80 and the impeller 46 connected to the pump main shaft hub 60 also similarly deviate from the axial center of the motor main shaft, and as a result, there is a concern that the impeller 46 comes into contact with the liner ring 50. In order to avoid the contact between the impeller 46 and the liner ring 50, it is necessary to further increase the inner diameter of the liner ring 50. However, if the inner diameter of the liner ring 50 increases, the clearance between the liner ring 50 and the impeller 46 increases, the amount of a fluid flowing from the clearance to the low-pressure side thus increases, and pump efficiency is degraded. In the embodiment, since the pump main shaft hub 60 is coupled to the motor main shaft 22 via transition fitting, it is possible to reduce the deviation between the axial centers of the pump main shaft hub 60 and the motor main shaft, and as a result, it is possible to prevent the contact between the liner ring 50 and the impeller 46, and it is not necessary to increase the inner diameter of the liner ring 50. Thus, the pump device 10 according to the embodiment can curb the degradation of pump efficiency as compared with a case in which the pump main shaft hub 60 can easily be pulled out (with a hand, for example) out of the motor main shaft 22.

In the pump device 10, the motor 20 and the pump 40 may be disassembled when the motor 20 is replaced, when maintenance for a bearing of the motor 20 is carried out, when maintenance for the pump device 10 is carried out, and the like. In the embodiment, the pump main shaft 80 is secured to the pump main shaft hub 60 by fastening the nuts 71 to the stud bolts 70 secured to the pump main shaft hub 60. Therefore, it is possible to separate the pump main shaft 80 from the pump main shaft hub 60 by detaching the nuts 71 from the stud bolts 70 when the motor 20 and the pump 40 are disassembled.

On the other hand, it is also conceivable that the pump main shaft 80 is secured to the pump main shaft hub 60 with a hexagon bolt instead of the stud bolts 70 and the nuts 71. However, in this case, it is necessary to form a space corresponding to a pulling margin of the hexagon bolt (the length corresponding to the entire length of the hexagon bolt) between the flange portion 81 of the pump main shaft 80 and the casing cover 44 in order to separate the pump main shaft 80 from the pump main shaft hub 60 (see Fig. 1). In this case, a space that is larger in the axial direction than a pulling margin for detaching the nuts 71 from the stud bolts 70 (the length of exposed portions of the stud bolts 70 and the length of the nuts 71) is required. Thus, since it is necessary to increase the length of the pump main shaft 80, an overhang of the pump device 10 is elongated, and the amount of deflection of the pump main shaft 80 increases. As a result, swinging of the pump main shaft 80 increases. Also, since it is also necessary to increase the length of the bracket 49 in the axial direction with the increase in length of the pump main shaft 80, this leads to an increase in weight and costs of the pump device 10. On the other hand, the stud bolts 70 and the nuts 71 are used in the embodiment, and it is thus possible to reduce the lengths of the overhang of the pump device 10 and the bracket 49 in the axial direction as compared with the case in which the hexagon bolt is used.

Although not part of the present invention, it is also conceivable that the motor 20 is pulled out of the pump main shaft hub 60 with the pump main shaft 80 and the pump main shaft hub 60 coupled to each other, in order to separate the pump 40 from the motor 20 in the case in which the pump main shaft 80 is secured to the pump main shaft hub 60 with the hexagon bolt. Specifically, in Fig. 1, a nut 53 coupling the bracket 49 to the motor 20 and the screw 72 are detached, and the motor 20 is pulled out of the pump main shaft hub 60. However, since a pulley removing device cannot be used in this case, it is necessary to couple the motor main shaft 22 to the pump main shaft hub 60 with clearance fitting rather than transition fitting, in order to pull the motor 20 out of the pump main shaft hub 60. Thus, since the clearance between the motor main shaft 22 and the pump main shaft hub 60 increases as described above, deviation between the axial centers of the motor main shaft 22 and the pump main shaft 80 increases when the pump main shaft hub 60 is secured to the motor main shaft 22 with the screw 72. On the other hand, since the stud bolts 70 and the nuts 71 are used in the embodiment, it is possible to disassemble the pump 40 and the motor 20 by separating the pump main shaft 80 from the pump main shaft hub 60. As a result, it is possible to pull the pump main shaft hub 60 out of the motor main shaft 22 using a pulley removing device after separating the pump main shaft 80 from the pump main shaft hub 60 even if the pump main shaft hub 60 is transition-fitted to the pump main shaft 80.

In the embodiment, the bracket 49 has the opening 52 for detaching the nuts 71 from the stud bolts 70. Specifically, it is possible to insert a tool into the opening 52 and thereby to detach the nuts 71 without disassembling the bracket 49 from the pump 40 and the motor 20. As a result, it is possible to detach the nuts 71 from the stud bolts 70 and to detach the pump main shaft 80 from the pump main shaft hub 60. Also, since the opening 52 is provided closer to the mechanical seal 48 than to the motor 20 in the axial direction of the pump main shaft 80, the opening 52 can be used as a window for inspecting the mechanical seal 48.

The pump main shaft hub 60 according to the embodiment has, in the outer peripheral surface thereof, the locked portion 64 engaged with the locking portion of the pulley removing device. Therefore, it is possible to pull the pump main shaft hub 60 out of the motor main shaft 22 using the pulley removing device after detaching the pump main shaft 80 from the pump main shaft hub 60.

Further, the pump main shaft hub 60 according to the embodiment has the notch portion 62 extending up to the outer peripheral surface in the end surface 63 that abuts on the flange portion 81 of the pump main shaft 80. In this manner, it is possible to easily separate the pump main shaft 80 from the pump main shaft hub 60 by inserting a tool such as a flathead screwdriver into the notch portion 62 when the pump main shaft 80 is detached from the pump main shaft hub 60.

Next, a method for disassembling the pump device according to the embodiment will be described. First, securing the motor 20 and the pump 40 to the base 30 is released. Next, the pump main shaft 80 is detached from the pump main shaft hub 60 (first process). Specifically, the protection plate attached to the opening 52 of the bracket 49, which is not illustrated, is detached, and the nuts 71 are detached from the stud bolts 70 through the opening 52. Then, a tool such as a flathead screwdriver is inserted into the notch portion 62 formed in the end surface 63 of the pump main shaft hub 60 to separate the pump main shaft 80 from the pump main shaft hub 60.

Next, the pump main shaft hub 60 is pulled out of the motor main shaft 22 (second process). Specifically, the nut 53 connecting the bracket 49 to the motor 20 is detached, and the motor 20 is pulled out of the pump 40 along with the pump main shaft hub 60. Thereafter, the screw 72 is detached from the pump main shaft hub 60. Next, the locking portion of the pulley removing device is engaged with the locked portion 64 formed in the outer peripheral surface of the pump main shaft hub 60, and the pump main shaft hub 60 is pulled out of the motor main shaft 22. At this time, the pump main shaft hub 60 is preferably heated with a burner or the like. In this manner, it is possible to easily detach the motor 20 from the pump 40.

Although the embodiment of the present invention has been described above, the aforementioned embodiment of the present invention is intended to facilitate understanding of the present invention, which is limited by the attached claims.

### REFERENCE SIGNS LIST

10 Pump device
20 Motor
22 Motor main shaft
40 Pump
41 Casing
44 Casing cover
44a Pore
46 Impeller
48 Mechanical seal
49 Bracket
52 Opening
60 Pump main shaft hub
62 Notch portion
63 End surface
64 Locked portion
66 Hole
70 Stud bolt
71 Nut
80 Pump main shaft
81 Flange portion
88 End surface

## Claims

1. A pump (40) comprising:
an impeller (46);
a pump main shaft (80) to which the impeller (46) is attached; and
a pump main shaft hub (60) that is detachably attached to an end of the pump main shaft (80),
wherein the pump main shaft hub (60) is a tubular member, into which a motor main shaft (22) is able to be inserted, the pump being **characterised in that**, the pump main shaft hub (60) is configured to be coupled to the motor main shaft (22) via transition fitting; and
wherein the pump main shaft hub (60) has, in an outer peripheral surface, a locked portion (64) configured to engage with a locking portion of a pulley removing device.

2. The pump (40) according to claim 1, wherein
the pump main shaft (80) has a flange portion (81) at the end,
the pump (40) further comprises a stud bolt (70) and a nut (70) for detachably attaching an end surface (63) of the pump main shaft hub (60) to the flange portion (81) of the pump main shaft (80), and
the end surface (63) of the pump main shaft hub (60) has a hole (66) for securing the stud bolt (70).

3. The pump (40) according to claim 2, comprising:
a casing (41) and a casing cover (44) configured to accommodate the impeller (46); and
a bracket (49) configured to couple the casing cover (44) to a motor (20) and to internally accommodate the pump main shaft hub (60),
wherein the bracket (49) has an opening (52) for detaching the nut (70) from the stud bolt (70).

4. The pump (40) according to claim 3, wherein
the casing cover (44) has an opening (44a) through which the pump main shaft (80) passes,
the pump (40) further has a sealing mechanism (48) configured to apply sealing between the pump main shaft (80) and the casing cover (44), and
the opening (52) is provided closer to the sealing mechanism (48) than to the motor (20) in an axial direction of the pump main shaft (80).

5. The pump (40) according to any one of claims 1 to 4, wherein
the pump main shaft (80) has a flange portion (81) at the end, and
the pump main shaft hub (60) has, in an end surface (88) that abuts on the flange portion (81) of the pump main shaft (80), a notch portion (62) extending up to the outer peripheral surface.

6. A pump device (10) comprising:
the pump (40) according to any one of claims 1 to 5; and
a motor (20) that has the motor main shaft (22) coupled to the pump main shaft hub (60) of the pump (40) via transition fitting.

7. A method for disassembling a pump device (10) in which a pump main shaft (80) and a motor main shaft (22) are connected via a pump main shaft hub (60) transition fitted to the motor main shaft (22), the method comprising:
a first process of detaching the pump main shaft (80) from the pump main shaft hub (60); and
a second process of pulling the pump main shaft hub (60) out of the motor main shaft (22) after the first process,
wherein the second process includes:
engaging a locking portion of a pulley removing device with a locked portion (64) formed in an outer peripheral surface of the pump main shaft hub (60); and
pulling the pump main shaft hub (60) out of the motor main shaft (22).

8. The method for disassembling a pump device (10) according to claim 7,
wherein the first process includes a process of detaching a nut (70) screwed onto a stud bolt (70) attached to the pump main shaft hub (60).

9. The method for disassembling a pump device (10) according to claim 8,
wherein the process of detaching the nut (70) includes coupling a casing cover (44) to a motor (20) and detaching the nut (70) through an opening (52) formed in a bracket (49) that internally accommodates the pump main shaft hub (60).

10. The method for disassembling a pump device (10) according to any one of claims 7 to 9,
wherein the first process includes inserting a tool into a notch portion (62) formed in an end surface (63) of the pump main shaft hub (60) that abuts on a flange portion (81) of the pump main shaft (80) and separating the flange portion (81) of the pump main shaft (80) from the pump main shaft hub (60).

## Patentansprüche

1. Eine Pumpe (40), die Folgendes aufweist
ein Laufrad (46);
eine Pumpenhauptwelle (80), an der das Laufrad (46) befestigt ist; und
eine Pumpenhauptwellennabe (60), die abnehmbar an einem Ende der Pumpenhauptwelle (80) befestigt ist,
wobei die Pumpenhauptwellennabe (60) ein rohrförmiges Element ist, in das eine Motor-Hauptwelle (22) eingeführt werden kann, wobei die Pumpe **dadurch gekennzeichnet ist, dass** die Pumpenhauptwellennabe (60) so konfiguriert ist, dass sie über eine Übergangspassung mit der Motor-Hauptwelle (22) gekoppelt ist; und
wobei die Pumpenhauptwellennabe (60) in einer äußeren Umfangsfläche einen Riegelabschnitt (64) aufweist, der so konfiguriert ist, dass er mit einem Verriegelungsabschnitt einer Riemenscheiben-Abziehvorrichtung in Eingriff kommt.

2. Pumpe (40) nach Anspruch 1, wobei
die Pumpenhauptwelle (80) einen Flanschabschnitt (81) am Ende aufweist,
die Pumpe (40) ferner einen Gewindebolzen (70) und eine Mutter (70) zum lösbaren Befestigen einer Endfläche (63) der Pumpenhauptwellennabe (60) an dem Flanschabschnitt (81) der Pumpenhauptwelle (80) aufweist, und
die Endfläche (63) der Pumpenhauptwellennabe (60) ein Loch (66) zur Befestigung des Gewindebolzen (70) aufweist.

3. Pumpe (40) nach Anspruch 2, die Folgendes aufweist:
ein Gehäuse (41) und einen Gehäuseabdeckung (44), die zum Aufnehmen des Laufrads (46) konfiguriert sind; und
einen Träger (49), der konfiguriert ist zum Koppeln der Gehäuseabdeckung (44) mit einem Motor (20) und zum Aufnehmen der Hauptwellennabe (60) der Pumpe im Inneren,
wobei der Träger (49) eine Öffnung (52) zum Lösen der Mutter (70) von dem Gewindebolzen (70) aufweist.

4. Pumpe (40) nach Anspruch 3, wobei
Die Gehäuseabdeckung (44) eine Öffnung (44a) aufweist, durch die die Pumpenhauptwelle (80) hindurchgeht,
die Pumpe (40) ferner einen Dichtungsmechanismus (48) aufweist, der konfiguriert ist zum Vorsehen einer Abdichtung zwischen der Pumpenhauptwelle (80) und der Gehäuseabdeckung (44), und
die Öffnung (52) in axialer Richtung der Pumpenhauptwelle (80) näher an dem Dichtungsmechanismus (48) als an dem Motor (20) vorgesehen ist.

5. Pumpe (40) nach einem der Ansprüche 1 bis 4, wobei
die Pumpenhauptwelle (80) an ihrem Ende einen Flanschabschnitt (81) aufweist, und
die Pumpenhauptwellennabe (60) in einer Endfläche (88), die an dem Flanschabschnitt (81) der Pumpenhauptwelle (80) anliegt, einen Kerbenabschnitt (62) aufweist, der sich bis zur Außenumfangsfläche erstreckt.

6. Pumpenvorrichtung (10), aufweisend:
die Pumpe (40) nach einem der Ansprüche 1 bis 5; und
einen Motor (20), dessen Motorhauptwelle (22) über eine Übergangspassung mit der Pumpenhauptwellennabe (60) der Pumpe (40) verbunden ist.

7. Verfahren zum Zerlegen einer Pumpenvorrichtung (10), bei der eine Pumpenhauptwelle (80) und eine Motorhauptwelle (22) über eine Pumpenhauptwellennabe (60) verbunden sind, die mittels Übergangspassung an die Motorhauptwelle (22) angepasst ist, wobei das Verfahren Folgendes aufweist:
einen erstens Vorgang zum Lösen der Pumpenhauptwelle (80) von der Pumpenhauptwellennabe (60); und
einen zweiten Vorgang des Herausziehens der Pumpenhauptwellennabe (60) aus der Motorhauptwelle (22) nach dem ersten Vorgang,
wobei der zweite Vorgang Folgendes aufweist:
In-Eingriff-Bringen eines Verriegelungsabschnitts einer Riemenscheiben-Abziehvorrichtung mit einem Riegelabschnitt (64), der in einer äußeren Umfangsfläche der Pumpenhauptwellennabe (60) ausgebildet ist; und
Herausziehen der Pumpenhauptwellennabe (60) aus der Motorhauptwelle (22).

8. Verfahren zum Zerlegen einer Pumpenvorrichtung (10) nach Anspruch 7,
wobei der erste Vorgang einen Vorgang des Lösens einer Mutter (70) aufweist, die auf einen an der Pumpenhauptwellennabe (60) angebrachten Gewindebolzen (70) geschraubt ist.

9. Verfahren zum Zerlegen einer Pumpenvorrichtung (10) nach Anspruch 8,
wobei der Vorgang des Lösens der Mutter (70) das Koppeln einer Gehäuseabdeckung (44) an einen Motor (20) und das Lösen der Mutter (70) durch eine Öffnung (52), die in einem Träger (49) ausgebildet ist, die die Pumpenhauptwellennabe (60) im Inneren aufnimmt, aufweist.

10. Verfahren zum Zerlegen einer Pumpenvorrichtung (10) nach einem der Ansprüche 7 bis 9,
wobei der erste Vorgang das Einführen eines Werkzeugs in einen in einer Endfläche (63) der Pumpenhauptwellennabe (60) ausgebildeten Kerbenabschnitt (62), der an einem Flanschabschnitt (81) der Pumpenhauptwelle (80) anliegt, und das Trennen des Flanschabschnitts (81) der Pumpenhauptwelle (80) von der Pumpenhauptwellennabe (60) aufweist.

## Revendications

1. Pompe (40) comprenant :
une roue (46) ;
un arbre principal de pompe (80) auquel la roue (46) est fixée ; et
un moyeu d'arbre principal de pompe (60) qui est fixé de manière amovible à une extrémité de l'arbre principal de pompe (80),
dans laquelle le moyeu d'arbre principal de pompe (60) est un élément tubulaire dans lequel un arbre principal de moteur (22) peut être inséré, la pompe étant **caractérisée par le fait que** le moyeu d'arbre principal de pompe (60) est configuré pour être couplé à l'arbre principal de moteur (22) par un raccord de transition ; et
dans laquelle le moyeu d'arbre principal de pompe (60) comporte, dans une surface périphérique externe, une partie verrouillée (64) configurée pour être en prise avec une partie de verrouillage d'un dispositif de retrait de poulie.

2. Pompe (40) selon la revendication 1, dans laquelle
l'arbre principal de pompe (80) a une partie de bride (81) à l'extrémité,
la pompe (40) comprend en outre un goujon (70) et un écrou (70) pour fixer de manière amovible une surface d'extrémité (63) du moyeu d'arbre principal de pompe (60) à la partie de bride (81) de l'arbre principal de pompe (80), et
la surface d'extrémité (63) du moyeu d'arbre principal de pompe (60) comporte un trou (66) pour fixer le goujon (70) .

3. Pompe (40) selon la revendication 2, comprenant :
un carter (41) et un couvercle de carter (44) configurés pour accueillir la roue (46) ; et
un support (49) configuré pour coupler le couvercle de carter (44) à un moteur (20) et pour loger intérieurement le moyeu d'arbre principal de pompe (60),
dans lequel le support (49) possède une ouverture (52) pour détacher l'écrou (70) du goujon (70).

4. Pompe (40) selon la revendication 3, dans laquelle
le couvercle de carter (44) a une ouverture (44a) à travers laquelle passe l'arbre principal de pompe (80),
la pompe (40) comporte en outre un mécanisme d'étanchéité (48) configuré pour assurer l'étanchéité entre l'arbre principal de pompe (80) et le couvercle de carter (44), et
l'ouverture (52) est prévue plus proche du mécanisme d'étanchéité (48) que du moteur (20) dans une direction axiale de l'arbre principal de pompe (80).

5. Pompe (40) selon l'une quelconque des revendications 1 à 4, dans laquelle
l'arbre principal de pompe (80) a une partie de bride (81) à l'extrémité, et
le moyeu d'arbre principal de pompe (60) à, dans une surface d'extrémité (88) qui vient en butée contre la partie de bride (81) de l'arbre principal de pompe (80), une partie d'encoche (62) qui s'étend jusqu'à la surface périphérique externe.

6. Dispositif de pompe (10) comprenant :
la pompe (40) selon l'une quelconque des revendications 1 à 5 ; et
un moteur (20) dont l'arbre principal (22) est couplé au moyeu d'arbre principal de pompe (60) de la pompe (40) par un raccord de transition.

7. Procédé de démontage d'un dispositif de pompe (10) dans lequel un arbre principal de pompe (80) et un arbre principal de moteur (22) sont reliés par un moyeu d'arbre principal de pompe (60) monté en transition sur l'arbre principal de moteur (22), le procédé comprenant :
un premier processus de détachement de l'arbre principal de pompe (80) du moyeu d'arbre principal de pompe (60) ; et
un deuxième processus d'extraction du moyeu d'arbre principal de pompe (60) hors de l'arbre principal de moteur (22) après le premier processus,
dans lequel le deuxième processus comprend :
la mise en prise d'une partie de verrouillage d'un dispositif de retrait de poulie avec une partie verrouillée (64) formée dans une surface périphérique externe du moyeu d'arbre principal de pompe (60) ; et
la traction du moyeu d'arbre principal de pompe (60) hors de l'arbre principal de moteur (22).

8. Procédé de démontage d'un dispositif de pompe (10) selon la revendication 7,
dans lequel le premier processus comprend un processus de détachement d'un écrou (70) vissé sur un goujon (70) fixé au moyeu d'arbre principal de pompe (60).

9. Procédé de démontage d'un dispositif de pompe (10) selon la revendication 8,
dans lequel le processus de détachement de l'écrou (70) comprend le couplage d'un couvercle de carter (44) à un moteur (20) et le détachement de l'écrou (70) à travers une ouverture (52) formée dans un support (49) qui loge intérieurement le moyeu d'arbre principal de pompe (60).

10. Procédé de démontage d'un dispositif de pompe (10) selon l'une quelconque des revendications 7 à 9,
dans lequel le premier processus comprend l'insertion d'un outil dans une partie d'encoche (62) formée dans une surface d'extrémité (63) du moyeu d'arbre principal de pompe (60) qui vient en butée contre une partie de bride (81) de l'arbre principal de pompe (80), et la séparation de la partie de bride (81) de l'arbre principal de pompe (80) du moyeu d'arbre principal de pompe (60).
